(19) Europäisches Patentamt / European Patent Office / Office européen des brevets

(11) **EP 4 769 566 A1**

(12) **EUROPEAN PATENT APPLICATION**
published in accordance with Art. 153(4) EPC

(43) Date of publication:
**01.07.2026 Bulletin 2026/27**

(21) Application number: **25860926.2**

(22) Date of filing: **29.08.2025**

(51) International Patent Classification (IPC):
**H01M 4/525** (2010.01)     **H01M 4/505** (2010.01)
**H01M 4/131** (2010.01)     **H01M 10/052** (2010.01)
**H01M 4/02** (2006.01)

(52) Cooperative Patent Classification (CPC):
**H01M 4/02; H01M 4/131; H01M 4/505;
H01M 4/525; H01M 10/052;** Y02E 60/10

(86) International application number:
**PCT/KR2025/013316**

(87) International publication number:
**WO 2026/049568 (05.03.2026 Gazette 2026/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **29.08.2024 KR 20240117212**

(71) Applicant: **LG ENERGY SOLUTION, LTD.
Seoul 07335 (KR)**

(72) Inventors:
• **KIM, Yeong Jin
Daejeon 34122 (KR)**
• **KIM, Ji Hye
Daejeon 34122 (KR)**
• **JUNG, Hae Jung
Daejeon 34122 (KR)**
• **HEO, Jong Wook
Daejeon 34122 (KR)**

(74) Representative: **Hoffmann Eitle
Patent- und Rechtsanwälte PartmbB
Arabellastraße 30
81925 München (DE)**

(54) **CATHODE ACTIVE MATERIAL PRECURSOR, CATHODE ACTIVE MATERIAL, CATHODE, AND ELECTROCHEMICAL DEVICE**

(57)     The present invention relates to a positive electrode active material including nickel among total metals excluding lithium in an amount of 80 mol% or more, and at least one doping element, wherein the at least one doping element has an average value of a first doping uniformity index, which is defined by Equation 1 and measured for each individual doping element, of 16% or less, and
having a particle strength of 121 MPa or more.

[Equation 1]

$$\text{First doping uniformity index} = [N_{SD}]/[N_{avg}]$$

wherein, in Equation 1, $[N_{SD}]$ is a standard deviation value of a molar ratio of the individual doping element to manganese (Mn) in the entire positive electrode active material, and $[N_{avg}]$ is an average value of the molar ratio of the individual doping element to the Mn in the entire positive electrode active material.

**(Cont. next page)**

[FIG. 1]

**Description**

**TECHNICAL FIELD**

Cross-reference to Related Applications

This application claims the benefit of priority from Korean Patent Application No. 10-2024-0117212, filed on August 29, 2024, the disclosure of which is incorporated by reference herein.

Technical Field

The present invention relates to a positive electrode active material precursor, a positive electrode active material, a positive electrode, and an electrochemical device.

**BACKGROUND ART**

Recently, with the rapid spread of electronic devices using batteries, such as mobile phones, notebook computers, and electric vehicles, demand for secondary batteries with relatively high capacity as well as small size and lightweight has been rapidly increased. Particularly, since a lithium secondary battery is lightweight and has high energy density, the lithium secondary battery is in the spotlight as a driving power source for portable devices. Accordingly, research and development efforts for improving the performance of the lithium secondary battery have been actively conducted.

In the lithium secondary battery in a state in which an organic electrolyte solution or a polymer electrolyte solution is filled between a positive electrode and a negative electrode which are respectively formed of active materials capable of intercalating and deintercalating lithium ions, electrical energy is produced by oxidation and reduction reactions when the lithium ions are intercalated/deintercalated into/from the positive electrode and the negative electrode.

Lithium cobalt oxide ($LiCoO_2$), lithium nickel oxide ($LiNiO_2$), lithium manganese oxide ($LiMnO_2$ or $LiMn_2O_4$), or a lithium iron phosphate compound ($LiFePO_4$) has been used as a positive electrode active material of the lithium secondary battery. Among them, the lithium cobalt oxide ($LiCoO_2$) has been widely used because it has an advantage of high operating voltage and excellent capacity characteristics, and has been used as a positive electrode active material for high voltage. However, due to an increase in the price of cobalt (Co) and supply instability, there is a limitation in using a large amount of the lithium cobalt oxide as a power source for applications such as electric vehicles, and thus, there is a need to develop a positive electrode active material that may replace the lithium cobalt oxide.

Accordingly, a nickel cobalt manganese-based lithium composite transition metal oxide, in which a portion of cobalt (Co) is substituted with nickel (Ni) and manganese (Mn), has been developed. A conventional lithium nickel cobalt manganese oxide was generally in a form of a spherical secondary particle in which tens to hundreds of primary particles were aggregated. However, with respect to the lithium nickel cobalt manganese oxide in the form of a secondary particle in which many primary particles are aggregated as described above, there is a problem in that particle breakage, in which the primary particles fall off in a rolling process during preparation of the positive electrode, is likely to occur and cracks occur in the particles during charge and discharge. In a case in which the particle breakage or cracking of the positive electrode active material occurs, since a contact area with an electrolyte solution is increased, there is a problem in that active material degradation and gas generation due to a side reaction with the electrolyte solution are increased and, as a result, life characteristics are degraded.

In order to solve the above-described problem, a technique of improving the life characteristics by introducing a dopant into a crystal of the positive electrode active material has been proposed. However, in a case in which the dopant is not uniformly doped within a particle, since electrochemical performance is degraded due to local doping or overdoping, there is a problem in that it rather has a negative effect on the life characteristics.

**DISCLOSURE OF THE INVENTION**

**TECHNICAL PROBLEM**

An aspect of the present invention provides a positive electrode active material precursor capable of forming a positive electrode active material having improved doping uniformity and particle strength.

Also, another aspect of the present invention provides a positive electrode active material which is prepared from the above positive electrode active material precursor to improve doping uniformity as well as particle breakage and initial resistance.

Also, another aspect of the present invention provides a positive electrode and an electrochemical device in which resistance characteristics and high-temperature life characteristics are excellent by using the above positive electrode active material.

**TECHNICAL SOLUTION**

[1] The present invention provides a positive electrode active material including nickel among total metals excluding lithium in an amount of 80 mol% or more, and at least one doping element, wherein the at least one doping element has an average value of a first doping uniformity index, which is defined by Equation 1 and measured for each individual doping element, of 16% or less, and having a particle strength of 121 MPa or more.

$$[\text{Equation 1}]$$

$$\text{First doping uniformity index} = [N_{SD}]/[N_{avg}]$$

In Equation 1, $[N_{SD}]$ is a standard deviation value of a molar ratio of the individual doping element to manganese (Mn) in the entire positive electrode active material, and $[N_{avg}]$ is an average value of the molar ratio of the individual doping element to the Mn in the entire positive electrode active material.

[2] The present invention provides the positive electrode active material of [1] above, wherein the at least one doping element has the average value of the first doping uniformity index, which is defined by Equation 1 and measured for each individual doping element, of 9.5% or less.

[3] The present invention provides the positive electrode active material of [1] or [2] above, wherein the at least one doping element has an average value of a second doping uniformity index, which is defined by Equation 2 and measured for each individual doping element, of 95% to 105%.

$$[\text{Equation 2}]$$

$$\text{Second doping uniformity index} = [N_{1/2}]/[N_{avg}]$$

In Equation 2, $[N_{1/2}]$ is a molar ratio of the individual doping element to Mn measured at a position of $D_{50}/2$ from a center of the positive electrode active material, and $[N_{avg}]$ is an average value of the molar ratio of the individual doping element to the Mn in the entire positive electrode active material.

[4] The present invention provides the positive electrode active material of at least one of [1] to [3] above, wherein the positive electrode active material has the particle strength of 125 MPa to 135 MPa.

[5] The present invention provides the positive electrode active material of at least one of [1] to [4] above, wherein a crystallite size of a (003) plane measured by X-ray diffraction (XRD) analysis is 107 nm or more.

[6] The present invention provides the positive electrode active material of at least one of [1] to [5] above, wherein the positive electrode active material has an average particle diameter $D_{50}$ of 7 $\mu$m to 15 $\mu$m.

[7] The present invention provides the positive electrode active material of at least one of [1] to [6] above, wherein the positive electrode active material has a roundness of 0.91 or more.

[8] The present invention provides the positive electrode active material of at least one of [1] to [7] above, wherein the positive electrode active material has a pore area ratio of 0.02 to 0.10.

[9] The present invention provides the positive electrode active material of at least one of [1] to [8] above, wherein the doping element is included in an amount of 5,000 ppm to 15,000 ppm based on a total weight of the positive electrode active material.

[10] The present invention provides a positive electrode including the positive electrode active material at least one of [1] to [9] above.

[11] The present invention provides an electrochemical device including the positive electrode of [10] above.

[12] The present invention provides a positive electrode active material precursor including nickel among total metals in an amount of 80 mol% or more, and having a roundness of 0.83 or more, and a pore area ratio (PAR) of 0.04 to 0.10.

[13] The present invention provides the positive electrode active material precursor of [12] above, wherein the pore area ratio is in a range of 0.05 to 0.08.

[14] The present invention provides the positive electrode active material precursor of [12] or [13] above, wherein the roundness is in a range of 0.85 to 0.92.

[15] The present invention provides the positive electrode active material precursor of at least one of [12] to [14] above, wherein the positive electrode active material precursor has an average particle diameter $D_{50}$ of 7 $\mu$m to 15 $\mu$m.

[16] The present invention provides the positive electrode active material precursor of at least one of [12] to [15] above, wherein a crystallite size of a (001) plane measured by X-ray diffraction (XRD) analysis is 15 nm or more.

[17] The present invention provides the positive electrode active material precursor of at least one of [12] to [16] above, wherein cobalt among the total metals is included in an amount of 1 mol% to 10 mol%.

## ADVANTAGEOUS EFFECTS

A positive electrode active material precursor of the present invention has an effect of improving doping uniformity and particle strength of a positive electrode active material prepared from the positive electrode active material precursor by controlling roundness and a pore area ratio (PAR) at a precursor level before sintering.

The positive electrode active material prepared from the positive electrode active material precursor of the present invention may have uniform doping throughout the positive electrode active material, and has an effect of improved initial resistance and excellent electrochemical performance due to excellent particle strength.

A positive electrode and an electrochemical device of the present invention may have excellent initial resistance and excellent life characteristics and high-temperature life characteristics by using the above positive electrode active material.

## BRIEF DESCRIPTION OF THE DRAWINGS

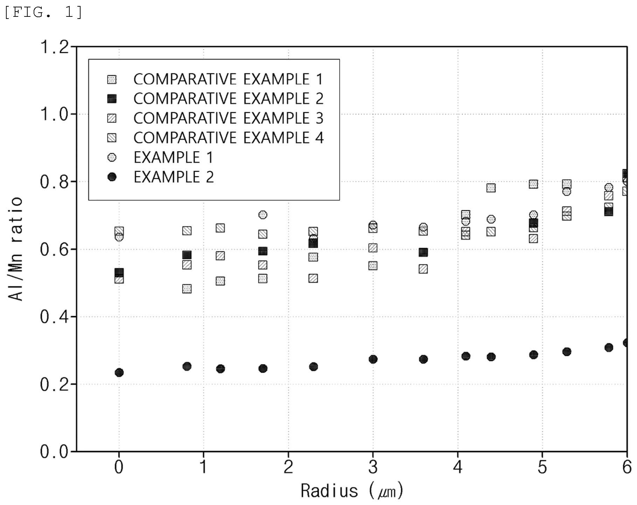

FIG. 1 illustrates results of measuring an aluminum (Al) doping amount from a particle center to a surface by inductively coupled plasma optical emission spectroscopy (ICP-OES) for each of positive electrode active materials prepared from positive electrode active material precursors prepared in Examples 1 and 2 and Comparative Examples 1 to 4.

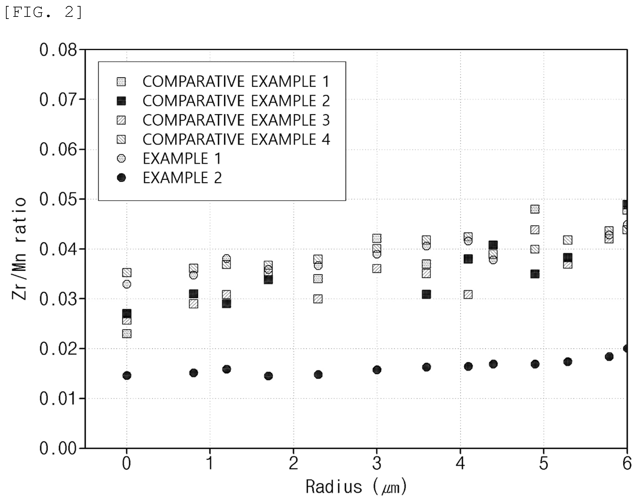

FIG. 2 illustrates results of measuring a zirconium (Zr) doping amount from the particle center to the surface by inductively coupled plasma optical emission spectroscopy (ICP-OES) for each of the positive electrode active materials prepared from the positive electrode active material precursors prepared in Examples 1 and 2 and Comparative Examples 1 to 4.

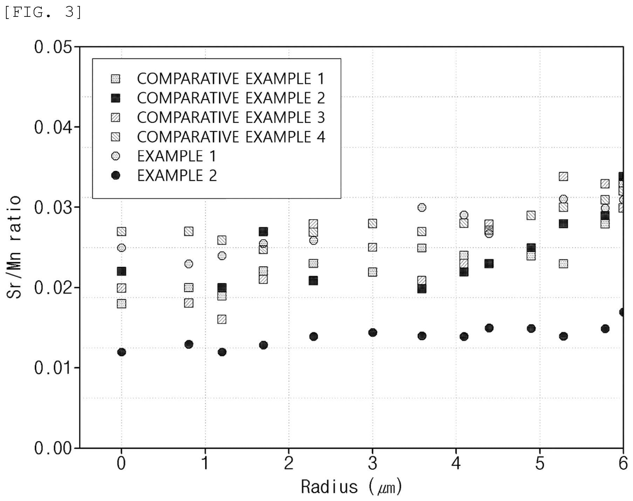

FIG. 3 illustrates results of measuring a strontium (Sr) doping amount from the particle center to the surface by inductively coupled plasma optical emission spectroscopy (ICP-OES) for each of the positive electrode active materials prepared from the positive electrode active material precursors prepared in Examples 1 and 2 and Comparative Examples 1 to 4.

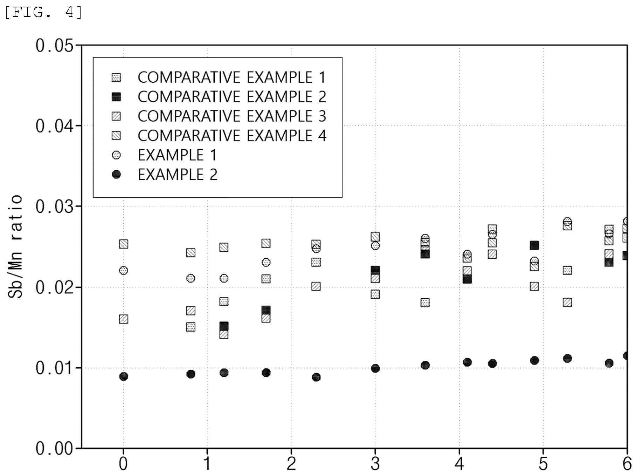

FIG. 4 illustrates results of measuring an antimony (Sb) doping amount from the particle center to the surface by inductively coupled plasma optical emission spectroscopy (ICP-OES) for each of the positive electrode active materials prepared from the positive electrode active material precursors prepared in Examples 1 and 2 and Comparative Examples 1 to 4.

## MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

A "secondary particle" in the present invention means a particle formed by aggregation of a plurality, for example, tens to hundreds of primary particles. Specifically, the secondary particle is an aggregate of 50 or more primary particles.

An "average particle diameter $D_{50}$" in the present invention means a particle size based on 50% in a volume cumulative particle size distribution of a target material. The average particle diameter (or median particle diameter) $D_{50}$ may be measured by using a laser diffraction method. For example, after dispersing the target material in a dispersion medium, the dispersion medium is introduced into a commercial laser diffraction particle size measurement instrument (e.g., Microtrac MT 3000) and then irradiated with ultrasonic waves of about 28 kHz at an output of 60 W to obtain a volume cumulative particle size distribution graph, and the average particle diameter $D_{50}$ may then be measured by obtaining a particle size corresponding to a volume accumulation of 50%.

An "average value" in the present invention may mean an arithmetic mean value.

"Roundness" in the present invention is a value derived from a minimum particle diameter ($D_{min}$, short diameter), a maximum particle diameter ($D_{max}$, long diameter), and an area (Area) of the particle which are obtained by converting the particles into two-dimensional images using cross-sectional images obtained by taking scanning electron microscope (SEM) images of the positive electrode active material precursor/positive electrode active material particles and analyzing the two-dimensional images using an image analysis program, wherein it means an average value of tens to hundreds of particles, preferably, 300 particles in the present invention, and is specifically calculated by the following Equation A.

$$[\text{Equation A}] \quad \text{Roundness} = (4 \times \text{area})/(\pi \times (D_{max})^2)$$

For example, the roundness may be measured by the following method.

A slurry is prepared by mixing the corresponding positive electrode active material precursor/positive electrode active material with carbon black and a PVDF binder in N-methylpyrrolidone at a weight ratio of 95:2:3, and the slurry is applied onto one surface of a 20 $\mu$m thick aluminum current collector. The applied slurry is dried to prepare an electrode, and the electrode is cut into a cross-section using an ion-milling device using an Ar$^+$ ion beam (manufacturer: Hitachi, product name: IM5000, accelerating voltage: 6 kV, ion beam current: 400 $\mu$A). A cross-sectional image of the electrode active material layer is obtained by taking a scanning electron microscopy (SEM) image of the cut electrode cross-section. Thereafter, for the cross-sectional image of the electrode, the minimum particle diameter ($D_{min}$, short diameter), the maximum particle diameter ($D_{max}$, long diameter) and the area (Area) of the particle are derived through an image analysis program, and the roundness of the positive electrode active material precursor/positive electrode active material may be derived from an arithmetic mean value obtained by calculating roundnesses of tens to hundreds or 300 positive electrode active material precursor/positive electrode active material particles by Equation A.

Also, since the roundness in this specification is a value derived from a scanning electron microscope cross-sectional image, it is not substantially different from the meaning of 'circularity', but a value analyzed as circularity in image analysis is expressed as the roundness considering that the positive electrode active material precursor/positive electrode active material particle is a three-dimensional particle.

A pore area ratio (PAR) in the present invention means a ratio of a pore area to an internal area of a positive electrode active material precursor/positive electrode active material particle. In this case, a hollow portion located at the center of the positive electrode active material precursor/positive electrode active material particle may not be considered as a pore when measuring the pore area.

Specifically, the pore area ratio (PAR) may be measured by a pore distribution analysis method in which particles are converted into two-dimensional images using cross-sectional images that are obtained by taking scanning electron microscope (SEM) images of the positive electrode active material precursor/positive electrode active material particles and the two-dimensional images are analyzed using an image analysis program. For example, a positive electrode slurry is prepared by mixing the positive electrode active material precursor/positive electrode active material with carbon black and a PVDF binder in N-methylpyrrolidone at a weight ratio of 95:2:3, and the positive electrode slurry is applied onto one surface of a 20 $\mu$m thick aluminum current collector. A positive electrode material mixture layer applied is dried at 130°C to prepare an electrode, and the electrode is cut into a cross-section using an ion-milling device using an Ar$^+$ ion beam (manufacturer: Hitachi, product name: IM5000, accelerating voltage: 6 kV, ion beam current: 400 $\mu$A). A cross-sectional image of the electrode active material layer is obtained by taking a scanning electron microscope (SEM) image of the cut electrode cross-section. Thereafter, for the cross-sectional image of the electrode active material layer, a pore region of the positive electrode active material precursor/positive electrode active material particle is indicated as a shaded area, and a dense region of the positive electrode active material precursor/positive electrode active material particle is indicated as a white area using image analysis software WinRoof 6.1.1. For each of 100 or more arbitrary precursor particles among the measured positive electrode active material precursor/positive electrode active material, a ratio (%) of [shaded area/(shaded area + white area) $\times$ 100] is calculated, and the pore area ratio (PAR) may be obtained by calculating an arithmetic mean value thereof.

Hereinafter, the present invention will be described in detail.

A positive electrode active material precursor according to the present invention, a positive electrode active material, a positive electrode, and/or an electrochemical device include at least one of configurations disclosed below, and may include any combination between technically possible configurations among the configurations below.

**Positive Electrode Active Material Precursor**

A positive electrode active material precursor of the present invention may include nickel among total metals in an amount of 80 mol% or more, 82 mol% or more, 85 mol% or more, 87 mol% or more, 90 mol% or more, 92 mol% or more, 93 mol% or more, 94 mol% or more, 95 mol% or more, 96 mol% or more, 99 mol% or less, 98 mol% or less, or 97 mol% or less.

For example, the positive electrode active material precursor of the present invention may include nickel among the total metals in an amount of 80 mol% or more, 90 mol% or more, 90 mol% or more, 93 mol% or more, or 95 mol% to 99 mol%. In a case in which the above range is satisfied, a positive electrode active material with high energy density may be prepared.

The positive electrode active material precursor of the present invention may include cobalt among the total metals in an amount of 1 mol% or more, 2 mol% or more, 3 mol% or more, 10 mol% or less, 7 mol% or less, 6 mol% or less, 5 mol% or less, 4 mol% or less, or 3 mol% or less. For example, the positive electrode active material precursor of the present invention may include cobalt among the total metals in an amount of 10 mol% or less, 1 mol% to 10 mol%, 1 mol% to 7 mol%, 1 mol% to 5 mol%, or 2 mol% to 4 mol%. In a case in which the above range is satisfied, a certain level or more of output characteristics may be secured while having a cost advantage by including relatively less cobalt.

The positive electrode active material precursor of the present invention may include manganese among the total metals in an amount of 0.1 mol% or more, 0.5 mol% or more, 0.8 mol% or more, 1 mol% or more, 10 mol% or less, 7 mol% or less, 5 mol% or less, 4 mol% or less, 3 mol% or less, 2 mol% or less, or 1 mol% or less. For example, the positive electrode active material precursor of the present invention may include manganese among the total metals in an amount of 10 mol% or less, 0.1 mol% to 7 mol%, 0.5 mol% to 5 mol%, 0.8 mol% to 3 mol%, or 0.8 mol% to 2 mol%. In a case in which the above range is satisfied, structural stability may be excellent while securing the energy density of the prepared positive electrode active material.

The positive electrode active material precursor of the present invention may include a nickel-based hydroxide containing nickel, cobalt, and manganese.

The positive electrode active material precursor of the present invention may have a composition represented by Formula 1 or Formula 2.

$$[\text{Formula 1}] \qquad [Ni_aCo_bMn_c](OH)_2$$

$$[\text{Formula 2}] \qquad [Ni_aCo_bMn_c]O \cdot OH$$

In Formulae 1 and 2, a represents a molar ratio of nickel among total metals in the positive electrode active material precursor, wherein a may satisfy $0.8 \leq a < 1$, $0.8 \leq a \leq 0.99$, $0.85 \leq a \leq 0.99$, $0.88 \leq a \leq 0.99$, $0.9 \leq a \leq 0.99$, $0.93 \leq a \leq 0.99$, $0.95 \leq a \leq 0.98$, or $0.97 \leq a \leq 0.99$.

In Formulae 1 and 2, b represents a molar ratio of cobalt among the total metals in the positive electrode active material precursor, wherein b may satisfy $0 < b < 0.2$, $0.01 \leq b \leq 0.1$, $0.02 \leq b \leq 0.07$, $0.02 \leq b \leq 0.05$, or $0.02 \leq b \leq 0.04$.

In Formulae 1 and 2, c represents a molar ratio of manganese among the total metals in the positive electrode active material precursor, wherein c may satisfy $0 < c < 0.2$, $0.001 \leq c \leq 0.1$, $0.005 \leq c \leq 0.05$, $0.008 \leq c \leq 0.03$, or $0.008 \leq c \leq 0.02$.

Roundness of the positive electrode active material precursor of the present invention may be 0.83 or more, 0.85 or more, 0.88 or more, 0.9 or more, 0.92 or more, 0.99 or less, 0.95 or less, 0.93 or less, or 0.92 or less. For example, the roundness of the positive electrode active material precursor may be 0.83 or more, 0.83 to 0.99, or 0.85 to 0.92. If the roundness of the positive electrode active material precursor of the present invention is 0.83 or more, since particle diameters in each three-dimensional direction of the precursor particles become similar, a dopant may have a uniform distribution in the positive electrode active material prepared from the positive electrode active material precursor.

An average particle diameter $D_{50}$ of the positive electrode active material precursor of the present invention may be 7 $\mu$m or more, 7 $\mu$m to 15 $\mu$m, 10 $\mu$m to 14 $\mu$m, 11 $\mu$m to 13.5 $\mu$m, or 12 $\mu$m to 13 $\mu$m. In a case in which the average particle diameter $D_{50}$ of the positive electrode active material precursor of the present invention is excessively small, since a specific surface area rather increases when a pore area ratio and the roundness of the positive electrode active material precursor satisfy ranges according to the present invention, the dopant may have a non-uniform distribution in the positive electrode active material prepared from the positive electrode active material precursor. Also, as particle strength of the positive electrode active material decreases, high-temperature life characteristics and resistance characteristics may be degraded. Thus, in a case in which the average particle diameter $D_{50}$ of the positive electrode active material precursor of the present invention satisfies the above range, the dopant may have a uniform distribution in the positive electrode active material prepared from the positive electrode active material precursor and the particle strength may be secured in combination with the pore area ratio (PAR) and roundness ranges of the positive electrode active material precursor of the present invention.

The pore area ratio (PAR) of the positive electrode active material precursor of the present invention may be in a range of 0.04 to 0.10. Specifically, the pore area ratio (PAR) of the positive electrode active material precursor of the present invention may be 0.04 or more, 0.05 or more, 0.06 or more, 0.07 or more, 0.075 or more, 0.10 or less, 0.095 or less, 0.09 or less, 0.085 or less, 0.08 or less, or 0.075 or less. For example, the pore area ratio (PAR) of the positive electrode active material precursor of the present invention may be in a range of 0.04 to 0.10, 0.05 to 0.09, 0.05 to 0.08, 0.06 to 0.08, or 0.07 to 0.08. In a case in which the pore area ratio (PAR) of the positive electrode active material precursor satisfies the above range, since a doping element may easily move inside the positive electrode active material precursor, the doping element may have a uniform distribution in the positive electrode active material prepared from the positive electrode active material precursor.

The positive electrode active material precursor of the present invention may have a crystallite size of a (001) plane measured by X-ray diffraction (XRD) analysis of 15 nm or more, 18 nm or more, 30 nm or less, 25 nm or less, 23 nm or less, 20 nm or less, or 19 nm or less. For example, the positive electrode active material precursor of the present invention may have a crystallite size of a (001) plane measured by X-ray diffraction (XRD) analysis of 15 nm or more, 15 nm to 30 nm, 15 nm to 25 nm, 17 nm to 25 nm, or 18 nm to 20 nm. The "crystallite size of the (001) plane" in the present invention means an average value of sizes of the (001) planes of the positive electrode active material precursor which are measured by X-ray diffraction (XRD) analysis, and may more specifically be obtained through a Rietveld method using XRD data. Specifically, the crystallite size of the (001) plane may be obtained as an average crystallite size of the (001) plane that is obtained by analyzing XRD data, which is measured ($2\theta=15°\sim90°$, step size=0.02°, total scan time: 20 min) using an X-ray diffractometer (Bruker, D8 Endeavor) after putting a sample in a center groove of a holder for general powder, leveling a surface of the sample using a slide glass, and simultaneously allowing a height to match an edge of the holder, using the Fundamental Parameter Approach embedded in a Bruker's TOPAS program based on the Rietveld method. Since the (001) plane in the positive electrode active material precursor is related to a movement path of lithium ions in the positive electrode active material being prepared, a layered structure may be stably formed when the crystallite size of the (001) plane satisfies the above range, and doping uniformity may be improved.

The positive electrode active material precursor of the present invention may include positive electrode active material precursor particles containing nickel among the total metals in an amount of 80 mol% or more, and having a roundness of 0.83 or more, and a pore area ratio (PAR) of 0.04 to 0.10.

The positive electrode active material precursor of the present invention may include 50 vol% or more, 60 vol% or more, 70 vol% or more, or 80 vol% or more of the positive electrode active material precursor particles. In this case, since the positive electrode active material prepared from the prepared positive electrode active material precursor may include a majority of particles having a uniform distribution of the dopant and may have excellent particle strength, resistance and life characteristics may be improved.

The positive electrode active material precursor according to the present invention may be prepared by the following preparation method, but the present invention is not limited thereto.

The positive electrode active material precursor of the present invention may be prepared by performing (1) a first step of forming positive electrode active material precursor nuclei (seeds) by performing a co-precipitation reaction while supplying a transition metal-containing solution, an ammonium cationic complexing agent, and a basic solution to a reactor; and (2) a second step of growing positive electrode active material precursor particles by performing a co-precipitation reaction while supplying a transition metal-containing solution, an ammonium complexing agent, and a basic solution to a reaction solution in which the positive electrode active material precursor nuclei have been formed.

First, positive electrode active material precursor nuclei (seeds) may be formed by performing a co-precipitation reaction while supplying a transition metal-containing solution, an ammonium cationic complexing agent, and a basic solution to a reactor. (first step)

The reactor may contain a reaction mother liquor. Specifically, before supplying the transition metal-containing solution, the ammonium cationic complexing agent, and the basic solution as reaction raw materials, the ammonium cationic complexing agent, the basic solution, and water may first be added to the reactor to form a reaction mother liquor.

In this case, the ammonium cationic complexing agent may include an ammonium cationic complexing agent compound containing at least one selected from the group consisting of $NH_4OH$, $(NH_4)_2SO_4$, $NH_4NO_3$, $NH_4Cl$, $CH_3COONH_4$, and $NH_4CO_3$, and the above compound may be added to the reactor in a form of a solution in which it is dissolved in a solvent. In this case, water or a mixture of water and an organic solvent (specifically, alcohol, etc.), which may be uniformly mixed with the water, may be used as the solvent. Most preferably, $NH_4OH$, i.e., ammonia water may be used.

The ammonium cationic complexing agent may have a concentration in which the ammonium cationic complexing agent compound is included in an amount of 20 wt% or less, 1 wt% to 15 wt%, 3 wt% to 12 wt%, or 6 wt% to 8 wt%. In a case in which the above range is satisfied, it may contribute to controlling the roundness and the pore area ratio of the prepared positive electrode active material precursor to satisfy the ranges according to the present invention.

Next, the basic solution may include at least one basic compound selected from the group consisting of NaOH, KOH, and $Ca(OH)_2$, and the above compound may be added to the reactor in a form of a solution in which it is dissolved in a solvent. In this case, water or a mixture of water and an organic solvent (specifically, alcohol, etc.), which may be uniformly mixed with the water, may be used as the solvent.

The basic solution may have a concentration in which the basic compound is included in an amount of 10 wt% to 40 wt%, 15 wt% to 35 wt%, 20 wt% to 30 wt%, or 23 wt% to 27 wt%.

The reaction mother liquor may be formed such that a pH is in a range of 9 to 12.5, or 10 to 12. When the pH of the reaction mother liquor satisfies the above range, positive electrode active material precursor nucleus formation may occur smoothly.

After the ammonium cationic complexing agent, the basic solution, and the water are added to the reactor to form the reaction mother liquor, it is desirable that the reaction mother liquor may be purged with nitrogen gas to remove oxygen in the reaction mother liquor.

Next, if a transition metal-containing solution, an ammonium cationic complexing agent, and a basic solution are supplied to the reactor containing the reaction mother liquor and stirred, positive electrode active material precursor nuclei may be formed as a co-precipitation reaction occurs.

Specifically, if a transition metal-containing solution, an ammonium cationic complexing agent, and a basic aqueous solution are supplied to the reactor containing the reaction mother liquor and stirred, precursor nuclei in a form of primary particles are generated (nucleation) as a co-precipitation reaction occurs, and nuclei (seeds) in a form of secondary particles may be formed as the nuclei in the form of primary particles are aggregated.

The ammonium cationic complexing agent and the basic aqueous solution may be the same as those described above.

The ammonium cationic complexing agent in the first step may be supplied at a flow rate of 1 mL/hr to 10 mL/hr, 1.5 mL/hr to 5 mL/hr, or 2 mL/hr to 4 mL/hr. In a case in which the above range is satisfied, a growth rate of the positive electrode active material precursor nucleus may be smoothly maintained.

The ammonium cationic complexing agent in the first step may be supplied to the reactor at an increasing flow rate.

In this case, the transition metal-containing solution may include nickel, cobalt and manganese elements, and may be formed by mixing a nickel raw material, a cobalt raw material, and a manganese raw material in water.

The nickel raw material may be $Ni(OH)_2$, $NiO$, $NiOOH$, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, a fatty acid nickel salt, or a nickel halide, and any one thereof or a mixture of two or more thereof may be used, but the nickel raw material is not limited thereto.

The cobalt raw material may be $Co(OH)_2$, $CoOOH$, $Co(OCOCH_3)_2 \cdot 4H_2O$, $Co(NO_3)_2 \cdot 6H_2O$, or $Co(SO_4)_2 \cdot 7H_2O$, and any one thereof or a mixture of two or more thereof may be used, but the cobalt raw material is not limited thereto.

The manganese raw material may be manganese oxides such as $Mn_2O_3$, $MnO_2$, and $Mn_3O_4$; manganese salts such as $MnCO_3$, $Mn(NO_3)_2$, $MnSO_4$, manganese acetate, manganese dicarboxylate, manganese citrate, and a fatty acid manganese salt; a manganese oxyhydroxide, or manganese chloride, and any one thereof or a mixture of two or more thereof may be used, but the manganese raw material is not limited thereto.

The transition metal-containing solution may include the nickel raw material such that an amount of nickel is 80 mol% or more, 90 mol% or more, 90 mol% or more, 97 mol% or more, or 97 mol% to 99 mol% based on the total metals. In a case in which the amount of the nickel in the transition metal-containing solution is 80 mol% or more, the capacity characteristics may be further improved.

The transition metal-containing solution may be supplied to the reactor at a flow rate of 0.1 L/h to 40L/h, 10 L/h to 35 L/h, 20 L/h to 30 L/h, or 22 L/h to 28 L/h.

The first step may be performed for 80 hours or less, or 70 hours or less. In a case in which the first step is performed during the above time, the positive electrode active material precursor nuclei are sufficiently formed, a particle size distribution may be uniform, and particle strength and productivity may be excellent.

Also, a pH of a reaction solution in the first step may be in a range of 10 to 12.5, 11 to 12, or 11.5 to 11.9.

The pH of the reaction solution in the first step may decrease during the reaction.

The pH of the reaction solution in the first step may decrease from 11 to 12, from 11.5 to 12, or from 11.7 to 11.9. The pH of the reaction solution in the first step may decrease from 11 to 12, from 11.3 to 11.9, or from 11.5 to 11.7. In this case, it may contribute to controlling the roundness and the pore area ratio of the prepared positive electrode active material precursor to satisfy the ranges according to the present invention.

A temperature of the reaction solution in the first step may be in a range of 30°C to 80°C, 40°C to 70°C, or 45°C to 60°C. In a case in which the pH and the temperature of the reaction solution satisfies the above ranges, the nuclei of the positive electrode active material precursor are formed in the reaction solution, and a process of forming seeds by aggregation of the nuclei may be smoothly performed. The pH of the reaction solution may be controlled by adjusting the amount of the basic solution added using a pH sensor or the like.

The first step may be performed in an oxidizing atmosphere. The oxidizing atmosphere may be formed by introducing an oxygen-containing gas at a flow rate such that an amount of oxygen is in a range of 0.1 L/h to 10 L/h, 0.5 L/h to 5 L/h, or 1 L/h to 3 L/h. In a case in which the above range is satisfied, a particle size of the positive electrode active material precursor may be made uniform, and the positive electrode active material precursor may be formed such that the roundness and pore area ratio satisfy the desired ranges.

The oxygen-containing gas, for example, may be a gas having an oxygen content of 21% or more, such as air, and may preferably be a gas having an oxygen content of 25% or more.

When the reactor becomes full in the first step, the supply of the raw materials is stopped and the stirring is stopped to allow the precursor particles in the reaction solution to settle, and, after removing a supernatant, the supply of the raw materials may be resumed to continue the reaction. Since sufficient reaction time required for the growth of the precursor particles may be secured by performing a process of removing the supernatant from the reactor as described above, the roundness and pore area ratio may be controlled. Also, a precursor production amount may be increased. The above process may be repeated two or more times. The above process may be performed before the second step described below.

Next, when the positive electrode active material precursor nuclei are sufficiently formed through the above-described process, positive electrode active material precursor particles may be grown by performing a co-precipitation reaction while supplying a transition metal-containing solution, an ammonium cationic complexing agent, and a basic solution to the reaction solution in which the positive electrode active material precursor nuclei have been formed. (second step)

Specifically, positive electrode active material precursor particles may be grown by performing a co-precipitation reaction while supplying a transition metal-containing solution, an ammonium cationic complexing agent, and a basic solution to the reaction solution in which the positive electrode active material precursor nuclei have been formed and stirring the solution.

The transition metal-containing solution, the ammonium cationic complexing agent, and the basic solution added in the second step may be the same as those used in the first step.

The transition metal-containing solution in the second step may be supplied while increasing its flow rate. The flow rate of the transition metal-containing solution in the second step may be reduced 6 hours to 20 hours, or 7 hours to 12 hours after the transition metal-containing solution is added. In this case, it may contribute to controlling the roundness and the pore area ratio of the prepared positive electrode active material precursor to satisfy the ranges according to the present invention.

A pH of the reaction solution in the second step may be in a range of 9 to 12, 10 to 11.5, 10.5 to 11.3, or 10.9 to 11.1. A temperature of the reaction solution in the second step may be in a range of 50°C to 80°C, 60°C to 77°C, 65°C to 75°C, or 67°C to 72°C. In a case in which the pH and the temperature of the reaction solution satisfy the above ranges, particle growth may occur smoothly. Also, it may contribute to controlling the roundness and the pore area ratio of the prepared positive electrode active material precursor to satisfy the ranges according to the present invention. The pH of the reaction solution may be controlled by adjusting the amount of the basic solution added using a pH sensor or the like.

The second step may be performed in a nitrogen atmosphere. In this case, it may contribute to controlling the roundness and the pore area ratio of the prepared positive electrode active material precursor to satisfy the ranges according to the present invention.

When the positive electrode active material precursor particles are sufficiently grown through the above process, the precursor particles may be separated from the reaction solution, washed, and then dried to obtain positive electrode active material precursor particles.

**Positive Electrode Active Material**

The positive electrode active material precursor according to the present invention prepared as described above may be mixed with a lithium raw material and then sintered to prepare a positive electrode active material.

The lithium raw material may be used without particular limitation as long as it is a compound containing a lithium source, and specifically, at least one selected from the group consisting of lithium carbonate ($Li_2CO_3$), lithium hydroxide ($LiOH \cdot H_2O$), $LiNO_3$, $CH_3COOLi$, and $Li_2(COO)_2$ may be used.

The positive electrode active material precursor and the lithium raw material may be mixed such that a molar ratio of lithium (Li):transition metals (Me) included in the positive electrode active material precursor is in a range of 1:1 to 1.2:1, 1:1 to 1.1:1, or 1:1 to 1.05:1. In a case in which the molar ratio of the positive electrode active material precursor to the lithium raw material satisfies the above range, capacity of the positive electrode active material prepared may be excellent, and since the sintering may proceed smoothly, a crystal structure of the positive electrode active material may be stably formed.

Also, a doping element-containing material may be additionally mixed during the sintering. The doping element may be at least one selected from the group consisting of aluminum (Al), zirconium (Zr), strontium (Sr), and antimony (Sb), and most preferably, it is desirable that all four of Al, Zr, Sr, and Sb are included.

The doping element-containing raw material may be at least one selected from the group consisting of acetic acid salts, sulfates, sulfides, hydroxides, oxides, or oxyhydroxides containing the doping element.

The sintering may be performed at 600°C to 1,000°C, 700°C to 950°C, 800°C to 930°C, 850°C to 920°C, or 870°C to 910°C. The sintering may be performed for 5 hours to 20 hours, 7 hours to 17 hours, or 10 hours to 15 hours, but the present invention is not limited thereto. When the sintering is performed at the above time and temperature, sufficient doping may be achieved within the prepared positive electrode active material.

The positive electrode active material of the present invention may include nickel among total metals excluding lithium in an amount of 80 mol% or more, 82 mol% or more, 85 mol% or more, 87 mol% or more, 90 mol% or more, 92 mol% or more, 93 mol% or more, 94 mol% or more, 95 mol% or more, 96 mol% or more, 99 mol% or less, 98 mol% or less, or 97 mol% or less. For example, the positive electrode active material of the present invention may include the nickel among the total metals excluding lithium in an amount of 80 mol% or more, 90 mol% or more, 90 mol% or more, 93 mol% or more, or 95 mol% to 99 mol%. In a case in which the above range is satisfied, the energy density of the positive electrode active material may be high.

The positive electrode active material of the present invention may include cobalt among the total metals excluding lithium in an amount of 1 mol% or more, 2 mol% or more, 3 mol% or more, 10 mol% or less, 7 mol% or less, 6 mol% or less, 5 mol% or less, 4 mol% or less, or 3 mol% or less. For example, the positive electrode active material of the present invention may include the cobalt among the total metals excluding lithium in an amount of 10 mol% or less, 1 mol% to 10 mol%, 1 mol% to 7 mol%, 1 mol% to 5 mol%, or 2 mol% to 4 mol%. In a case in which the above range is satisfied, since the positive electrode active material includes a relatively small amount of the cobalt, it may secure output characteristics at a certain level or higher while having a cost advantage.

The positive electrode active material of the present invention may include manganese among the total metals excluding lithium in an amount of 0.1 mol% or more, 0.5 mol% or more, 0.8 mol% or more, 1 mol% or more, 2 mol% or more, 10 mol% or less, 7 mol% or less, 5 mol% or less, 4 mol% or less, 3 mol% or less, 2 mol% or less, or 1 mol% or less. For example, the positive electrode active material of the present invention may include the manganese among the total metals excluding lithium in an amount of 10 mol% or less, 0.1 mol% to 7 mol%, 0.5 mol% to 5 mol%, or 0.8 mol% to 3 mol%. In a case in which the above range is satisfied, the structural stability may be excellent while securing the energy density of the positive electrode active material.

The positive electrode active material of the present invention may include at least one doping element. The doping element may refer to a metallic element other than lithium, nickel, cobalt, and manganese included in the positive electrode active material. The doping element may be at least one selected from the group consisting of Al, Zr, Sr, and Sb, or may include all four of Al, Zr, Sr, and Sb.

The doping element may be included in an amount of 5,000 ppm to 15,000 ppm, 7,000 ppm to 13,000 ppm, 9,000 ppm to 12,000 ppm, or 10,000 ppm to 11,000 ppm based on a total weight of the positive electrode active material. When doped with the above amount, doping may be sufficiently uniform, and thermal stability, resistance characteristics, and life characteristics may be excellent.

The Al may be included in an amount of 3000 to 9000 ppm, 4000 ppm to 8500 ppm, 5000 ppm to 8000 ppm, or 6000 ppm to 7000 ppm based on the total weight of the positive electrode active material. In a case in which an entire particle crystal structure is uniformly doped with the Al, since the layered structure is stabilized by uniform bonding of Al-O and oxygen release is suppressed, there is an effect of improving the thermal stability of the positive electrode active material.

The Zr may be included in an amount of 1000 to 2000 ppm, 1100 ppm to 1900 ppm, and more preferably 1200 ppm to 1800 ppm based on the total weight of the positive electrode active material. Since the Zr has a larger ionic radius than transition metals, it improves lithium ion conductivity by forming a large passage through which lithium ions are transferred when the entire particle crystal structure is uniformly doped with the Zr, and thus, there is an effect of improving the resistance characteristics of the positive electrode active material.

The Sr may be included in an amount of 500 to 1500 ppm, 700 ppm to 1300 ppm, or 800 ppm to 1200 ppm based on the total weight of the positive electrode active material. The Sr is doped at a lithium site and a transition metal site, wherein when the entire particle crystal structure is uniformly doped with the Sr, since it supports the crystal structure due to a large ionic radius, there is an effect of improving the life and resistance characteristics of a lithium secondary battery including the same. Also, in a case in which the entire particle crystal structure is uniformly doped with the Sr, since surface activity is improved by improving chemical energy inside the crystal and improving grain boundary energy and surface energy, stability and surface activity of the positive electrode active material particles are improved, and thus, there is the effect of improving the life and resistance characteristics of the lithium secondary battery including the same.

The Sb may be included in an amount of 1000 to 2000 ppm, 1200 ppm to 1800 ppm, or 1400 ppm to 1600 ppm based on the total weight of the positive electrode active material. Since the Sb is a polyatomic heavy metal, it is doped at the transition metal site to form a stronger covalent bond with oxygen. In a case in which the entire particle crystal structure is uniformly doped with the Sb, since it may suppress desorption of oxygen from a lattice structure to improve phase stability, it may improve the life characteristics of the positive electrode active material including the same. Also, since the Sb allows the primary particles to be formed small, an orientation of the positive electrode active material is improved and a lithium ion movement path is shortened when the entire particle crystal structure is uniformly doped with the Sb, and thus, it may improve initial resistance of the positive electrode active material including the same.

The positive electrode active material of the present invention may include a lithium nickel-based oxide containing nickel, cobalt, manganese, and the doping element.

The positive electrode active material of the present invention may have a composition represented by Formula 3 below.

[Formula 3]     $Li_aNi_bCo_cMn_dM^1_eO_2$

In Formula 3, $M^1$ is a doping element doped into the positive electrode active material, wherein $M^1$ may include at least one selected from the group consisting of Al, Zr, Sr, and Sb.

In Formula 3, a represents a molar ratio of lithium in the positive electrode active material, wherein a may satisfy $0.8 \leq a \leq 1.5$, $0.85 \leq a \leq 1.2$, $0.9 \leq a \leq 1.2$, $0.95 \leq a \leq 1.1$, or $1.0 \leq a \leq 1.05$.

In Formula 3, b represents a molar ratio of nickel to the total number of moles of total metals excluding lithium in the positive electrode active material, wherein b may satisfy $0.8 \leq b \leq 0.99$, $0.85 \leq b \leq 0.98$, $0.90 \leq b \leq 0.98$, or $0.95 \leq b \leq 0.98$.

In Formula 3, c represents a molar ratio of cobalt to the total number of moles of total metals excluding lithium in the positive electrode active material, wherein c may satisfy $0 < c < 0.2$, $0.01 \leq c < 0.1$, $0.02 \leq c \leq 0.08$, or $0.02 \leq c \leq 0.05$.

In Formula 3, d represents a molar ratio of manganese to the total number of moles of total metals excluding lithium in the positive electrode active material, wherein d may satisfy $0 < d < 0.2$, $0.001 \leq d < 0.2$, $0.005 \leq d \leq 0.1$, or $0.008 \leq d \leq 0.05$.

In Formula 3, e represents a molar ratio of $M^1$ to the total number of moles of total metals excluding lithium in the positive electrode active material, wherein e may satisfy $0 < e < 0.1$, $0.001 \leq e < 0.1$, $0.003 \leq e \leq 0.08$, or $0.005 \leq e \leq 0.05$.

Preferably, the positive electrode active material of the present invention may have a composition of Formula 3-1 below.

$$[\text{Formula 3-1}] \qquad Li_{a1}Ni_{b1}Co_{c1}Mn_{d1}Al_{e1}Zr_{e2}Sr_{e3}Sb_{e4}O_2$$

In Formula 3-1, a1 represents a molar ratio of lithium in the positive electrode active material, wherein a1 may satisfy $0.8 \leq a1 \leq 1.2$, $0.85 \leq a1 \leq 1.15$, or $0.9 \leq a1 \leq 1.1$.

In Formula 3-1, b1 represents a molar ratio of nickel to the total number of moles of total metals excluding lithium in the positive electrode active material, wherein b1 may satisfy $0.8 \leq b1 \leq 0.99$, $0.85 \leq b1 \leq 0.98$, $0.90 \leq b1 \leq 0.98$, or $0.90 \leq b1 \leq 0.95$.

In Formula 3-1, c1 represents a molar ratio of cobalt to the total number of moles of total metals excluding lithium in the positive electrode active material, wherein c1 may satisfy $0 < c1 < 0.2$, $0.01 \leq c1 < 0.1$, $0.02 \leq c1 \leq 0.08$, or $0.02 \leq c1 \leq 0.05$.

In Formula 3-1, d1 represents a molar ratio of manganese to the total number of moles of total metals excluding lithium in the positive electrode active material, wherein d1 may satisfy $0 < d1 < 0.2$, $0.001 \leq d1 < 0.2$, $0.005 \leq d1 \leq 0.1$, or $0.008 \leq d1 \leq 0.05$.

In Formula 3-1, e1 represents a doping amount of Al relative to the total number of moles of total metals excluding lithium in the positive electrode active material, wherein e1 may satisfy $0 \leq e1 \leq 0.05$, $0.001 \leq e1 \leq 0.04$, or $0.005 \leq e1 \leq 0.03$.

In Formula 3-1, e2 represents a doping amount of Zr relative to the total number of moles of total metals excluding lithium in the positive electrode active material, wherein e2 may satisfy $0 \leq e2 \leq 0.003$, $0.0005 \leq e2 \leq 0.0025$, or $0.001 \leq e2 \leq 0.002$.

In Formula 3-1, e3 represents a doping amount of Sr relative to the total number of moles of total metals excluding lithium in the positive electrode active material, wherein e3 may satisfy $0 \leq e3 \leq 0.003$, $0.0005 \leq e3 \leq 0.0025$, or $0.001 \leq e3 \leq 0.002$.

In Formula 3-1, e4 represents a doping amount of Sb relative to the total number of moles of total metals excluding lithium in the positive electrode active material, wherein e4 may satisfy $0 \leq e4 \leq 0.003$, $0.0005 \leq e4 \leq 0.0025$, or $0.001 \leq e4 \leq 0.002$.

The at least one doping element may have an average value of a first doping uniformity index, which is defined by Equation 1 below and measured for each individual doping element, of 16% or less. The first doping uniformity index is defined as a standard deviation of the doping element amount in the entire positive electrode active material relative to the doping element amount present in the positive electrode active material, and may function as a parameter indicating how uniformly the doping element is distributed within the crystal structure of the positive electrode active material. In this case, since manganese serves as a framework that increases structural stability within the crystal structure of the positive electrode active material, it is suitable as a reference for indicating a distribution of the doping elements.

$$[\text{Equation 1}]$$

$$\text{First doping uniformity index} = [N_{SD}]/[N_{avg}]$$

In Equation 1, $[N_{SD}]$ is a standard deviation value of a molar ratio of the individual doping element to Mn in the entire positive electrode active material, and $[N_{avg}]$ is an average value of the molar ratio of the individual doping element to the Mn in the entire positive electrode active material.

The molar ratio of the individual doping element to Mn in the $[N_{SD}]$ and $[N_{avg}]$ may be measured by analysis using etching inductively coupled plasma spectroscopy (etching ICP).

The at least one doping element may have an average value of the first doping uniformity index, which is defined by Equation 1 and measured for each individual doping element, of 16% or less, 15% or less, 14% or less, 13% or less, 12% or less, 11% or less, 10% or less, or 9.5% or less. In a case in which the above range is satisfied, the resistance characteristics and high-temperature life characteristics of the positive electrode active material may be excellent.

The at least one doping element may have an average value of a second doping uniformity index, which is defined by Equation 2 below and measured for each individual doping element, of 95% to 105%. In the second doping uniformity index, $[N_{SD}]$ represents an amount of the doping element present near a surface of the positive electrode active material. Since the doping element is non-uniformly distributed within the positive electrode active material when it remains on the surface of the positive electrode active material or excessively penetrates into the positive electrode active material, the average value of the second doping uniformity index may function as a parameter indicating how uniformly the doping element is distributed within the crystal structure of the positive electrode active material.

$$[\text{Equation 2}]$$

$$\text{Second doping uniformity index} = [N_{1/2}]/[N_{avg}]$$

In Equation 2, $[N_{1/2}]$ is a molar ratio of the individual doping element to Mn measured at a position of $D_{50}/2$ from the center of the positive electrode active material, and $[N_{avg}]$ is an average value of the molar ratio of the individual doping element to the Mn in the entire positive electrode active material.

The molar ratio of the individual doping element to Mn in the $[N_{1/2}]$ and $[N_{avg}]$ may be measured by analysis using etching inductively coupled plasma spectroscopy (etching ICP).

In this case, the center of the positive electrode active material may mean a center of a circle having an area matching an area of the corresponding positive electrode active material in a cross-sectional image of the positive electrode active material obtained by a scanning electron microscope.

The at least one doping element may have the average value of the second doping uniformity index, which is defined by Equation 2 and measured for each individual doping element, of 95% or more, 96% or more, 97% or more, 98% or more, 98.5% or more, 99% or more, 99.5% or more, 105% or less, 104% or less, 103% or less, 102% or less, 101% or less, or 100% or less. For example, the at least one doping element may have the average value of the second doping uniformity index, which is defined by Equation 2 and measured for each individual doping element, of 95% to 105%, 98.5% to 102%, or 99% to 100%. In a case in which the above range is satisfied, the resistance characteristics and high-temperature life characteristics of the positive electrode active material may be excellent.

Since the positive electrode active material of the present invention is prepared from the positive electrode active material precursor of the present invention and has excellent doping uniformity, it may satisfy the above conditions.

The positive electrode active material of the present invention may have a particle strength of 121 MPa or more, 122 MPa or more, 123 MPa or more, 124 MPa or more, 125 MPa or more, 126 MPa or more, 127 MPa or more, 128 MPa or more, 129 MPa or more, 130 MPa or more, 131 MPa or more, 132 MPa or more, 133 MPa or more, 134 MPa or more, 135 MPa or more, 300 MPa or less, 250 MPa or less, 230 MPa or less, 200 MPa or less, 180 MPa or less, 150 MPa or less, 140 MPa or less, 136 MPa or less, 135 MPa or less, 133 MPa or less, or 131 MPa or less. For example, the positive electrode active material of the present invention may have a particle strength of 121 MPa or more, 121 MPa to 300 MPa, 122 MPa to 200 MPa, 123 MPa to 150 MPa, 125 MPa to 135 MPa, or 128 MPa to 132 MPa. Even if the average value of the first doping uniformity index satisfies a specific range or less so that doping is performed uniformly, particle breakage and cracking may occur when the particle strength of the positive electrode active material is low, and thus, it may adversely affect the resistance characteristics and high-temperature life characteristics. Accordingly, since the positive electrode active material of the present invention may suppress particle breakage during a rolling process by satisfying the above range of the particle strength, an effect due to doping uniformity may be optimally achieved. Thus, a battery with excellent resistance characteristics and high-temperature life characteristics may be prepared.

The particle strength in the present invention may be defined as compressive fracture strength. Specifically, in this specification, the "particle strength" may be measured by applying pressure in a direction perpendicular to the positive electrode active material using a Surface testing Platform_step 300 instrument by Anton Paar GmbH to measure a point at which a crack occurs in the particle, calculating the particle strength according to [Equation B] below, and then repeating this 10 times to obtain an arithmetic mean value of the particle strength.

[Equation B]

Particle strength (unit: MPa) =

$$\frac{P}{\pi D^2}\left\{\frac{\sqrt{3}}{\sqrt{2}} + (1-2\mu)\frac{2}{\sqrt{2}+1}\right\}$$

In [Equation B], P represents the pressure applied perpendicular to the particle at the point when the crack occurs in the particle.

In [Equation B], D represents a diameter of the particle assuming that the particle is perfectly spherical, and may be calculated as an arithmetic mean value of a horizontal diameter and a vertical diameter of the particle. In this case, the diameter of the particle may be measured from an SEM image of the particle taken using a scanning electron microscope (SEM).

In [Equation B], $\mu$ represents Poisson's ratio, and may be defined as a ratio of vertical strain ($R_v$) to horizontal strain ($R_p$) of the diameter of the particle.

The vertical strain ($R_v$) of the diameter of the particle may be calculated according to [Equation B-1] below.

[Equation B-1]

Vertical strain ($R_v$) of the particle diameter = $\frac{(1-D_v)}{D_0}$

In [Equation B-1], $D_0$ means a diameter of the particle in a vertical direction before applying pressure to the particle, and $D_v$ means a diameter of the positive electrode active material particle in a vertical direction at the point when the crack occurs in the particle.

The horizontal strain ($R_p$) of the diameter of the particle may be calculated according to [Equation B-2] below. However, when calculating the Poisson's ratio, since horizontal deformation of the particle may not be considered, the horizontal strain ($R_p$) may be calculated as 1.

[Equation B-2]

Horizontal strain ($R_v$) of the particle diameter = $\frac{(1-D_p)}{D_1}$

In [Equation B-2], $D_1$ means a diameter of the particle in a horizontal direction before applying pressure to the particle, and $D_p$ means a diameter of the particle in a horizontal direction at the point when the crack occurs in the particle.

The positive electrode active material of the present invention may have a crystallite size of a (003) plane measured by X-ray diffraction analysis of 200 nm or less, 150 nm or less, 130 nm or less, 120 nm or less, 113 nm or less, 110 nm or less, 108 nm or less, 50 nm or more, 60 nm or more, 70 nm or more, 80 nm or more, 85 nm or more, 88 nm or more, 90 nm or more, 95 nm or more, 98 nm or more, 100 nm or more, 103 nm or more, 105 nm or more, 107 nm or more, or 108 nm or more. The above ranges may be combined without limitation. In a case in which the above range is satisfied, since the thermodynamically stable and electrochemically unstable (003) plane grows to an appropriate degree, an effect of improving lithium ion mobility and reducing a side reaction with an electrolyte may be optimized. Accordingly, the resistance and life characteristics of the positive electrode active material may be excellent.

The "crystallite size of the (003) plane" in the present invention means an average value of sizes of the (003) planes which are measured by X-ray diffraction (XRD) analysis, and may more specifically be obtained through a Rietveld method using XRD data. Specifically, the crystallite size of the (003) plane may be obtained as an average crystallite size of the (003) plane that is obtained by analyzing XRD data, which is measured ($2\theta$=6°~125°, step size=0.02°, total scan time: 33 min) using an X-ray diffractometer (Bruker, D8 Endeavor) after putting a sample in a center groove of a holder for general powder, leveling a surface of the sample using a slide glass, and simultaneously allowing a height to match an edge of the holder, using the Fundamental Parameter Approach embedded in a Bruker's TOPAS program based on the Rietveld method.

The positive electrode active material of the present invention may have a pore area ratio of 0.02 to 0.1, 0.02 to 0.08, 0.025 to 0.07, 0.03 to 0.06, or 0.04 to 0.05. In a case in which the above range is satisfied, since the electrolyte is sufficiently impregnated into the positive electrode active material, the resistance characteristics and the life characteristics may be excellent.

The positive electrode active material of the present invention may have a roundness of 0.85 or more, 0.90 or more, 0.91 or more, 0.92 or more, 0.93 or more, 0.94 or more, or 0.95 or more. In a case in which the above range is satisfied, energy density may be increased, a movement path of lithium ions in a positive electrode may be secured smoothly, and structural stability may be excellent.

An average particle diameter $D_{50}$ of the positive electrode active material of the present invention may be 7 $\mu$m or more, 8 $\mu$m or more, 10 $\mu$m or more, 11 $\mu$m or more, 12 $\mu$m or more, 13 $\mu$m or more, 15 $\mu$m or less, or 14 $\mu$m or less. For example, the average particle diameter $D_{50}$ of the positive electrode active material of the present invention may be in a range of 7 $\mu$m to 15 $\mu$m, 10 $\mu$m to 14 $\mu$m, or 12 $\mu$m to 14 $\mu$m.

## Positive Electrode

A positive electrode according to the present invention includes the above-described positive electrode active material of the present invention. Specifically, the positive electrode includes a positive electrode collector and a positive electrode active material layer disposed on the positive electrode collector, and the positive electrode active material layer may include a conductive agent and a binder in addition to the positive electrode active material according to the present invention. Since the positive electrode active material has been described above, a detailed description thereof will be omitted and only the remaining components will be described in detail below.

The positive electrode collector of the present invention may include a metal having high conductivity, and is not particularly limited as long as it has no reactivity in a voltage range of the battery and the positive electrode active material layer is easily adhered thereto. As the positive electrode collector, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 $\mu$m to 500 $\mu$m, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a nonwoven fabric body, and the like.

The positive electrode active material included in the positive electrode active material layer of the present invention may be included in an amount of 95 wt% to 100 wt%, preferably 98 wt% to 100 wt%, and more preferably 99 wt% to 100 wt% based on a total weight of the positive electrode active material included in the positive electrode active material layer. Most preferably, 100% of a positive electrode active material in a form of a single particle or a pseudo-single particle may be included. When the amount of the positive electrode active material of the present invention satisfies the above range, sufficient life characteristics may be obtained. The reason for this is that in a case in which the positive electrode active material in a form of a secondary particle is included in an amount greater than 5 wt% of the total positive electrode active material, since the side reaction with the electrolyte increases due to fine powder generated from the secondary particles during preparation of the electrode and charge and discharge, an effect of suppressing gas generation is reduced.

The positive electrode active material layer of the present invention may optionally include a conductive agent and a binder in addition to the positive electrode active material, if necessary.

In this case, the positive electrode active material may be included in an amount of 80 wt% to 99 wt%, more specifically, 85 wt% to 98.5 wt% based on a total weight of the positive electrode active material layer, and when the positive electrode active material is included within the above amount range, it may exhibit excellent capacity characteristics.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon-based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 15 wt% based on the total weight of the positive electrode active material layer.

The binder improves the adhesion between positive electrode active material particles and the adhesion between the positive electrode active material and the current collector. Specific examples of the binder may be polyvinylidene fluoride (PVDF), polyvinylidene fluoridehexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with lithium (Li), sodium (Na), or calcium (Ca), or various copolymers thereof, and any one thereof or a mixture of two or more thereof may be used. The binder may be included in an amount of 0.1 wt% to 15 wt% based on the total weight of the positive electrode active material layer.

The positive electrode may be prepared according to a typical method of preparing a positive electrode. Specifically, a composition for forming a positive electrode active material layer may be prepared by dissolving or dispersing the positive electrode active material as well as optionally the binder, the conductive agent, and a dispersant in a solvent. The composition for forming a positive electrode active material layer is applied, dried, and then rolled to prepare the positive electrode.

The solvent may be a solvent normally used in the art. The solvent may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the positive electrode active material, the conductive agent, the binder, and the dispersant in consideration of a coating thickness of the slurry and manufacturing yield, and may allow to have viscosity that may provide excellent thickness uniformity during the subsequent coating for the preparation of the positive electrode.

Also, as another method, the positive electrode may be prepared by casting the composition for forming a positive electrode active material layer on a separate support and then laminating a film separated from the support on the positive electrode collector.

## Electrochemical Device

Next, an electrochemical device according to the present invention will be described. The electrochemical device according to the present invention includes the above-described positive electrode of the present invention, wherein the electrochemical device may specifically be a battery or a capacitor, and, for example, may be a lithium secondary battery.

The lithium secondary battery specifically includes a positive electrode, a negative electrode disposed to face the positive electrode, a separator disposed between the positive electrode and the negative electrode, and an electrolyte, wherein, since the positive electrode is the same as described above, a detailed description thereof will be omitted, and only the remaining components will be described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 $\mu$m to 500 $\mu$m, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a nonwoven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_\beta(0<\beta<2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

**EP 4 769 566 A1**

The negative electrode active material may be included in an amount of 80 wt% to 99 wt% based on a total weight of the negative electrode active material layer.

The binder is a component that assists in the binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a fluoro rubber, and various copolymers thereof.

The conductive agent is a component for further improving conductivity of the negative electrode active material, wherein the conductive agent may be added in an amount of 10 wt% or less, preferably, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder, and nickel powder; conductive whiskers such as zinc oxide whiskers and potassium titanate whiskers; conductive metal oxide such as titanium oxide; or polyphenylene derivatives may be used.

The negative electrode active material layer may be prepared by coating a composition for forming a negative electrode active material layer, which is prepared by dissolving or dispersing optionally the binder and the conductive agent as well as the negative electrode active material in a solvent, on the negative electrode collector and drying the coated negative electrode collector, or may be prepared by casting the composition for forming a negative electrode active material layer on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an esterbased solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a doublebond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used as the lithium salt. The lithium salt may be used in a concentration range of 0.1 M to 2.0 M. If the concentration of the lithium salt is included within the above range, since the electrolyte may have appropriate conductivity and viscosity, excellent performance of the electrolyte may be obtained and lithium ions may effectively move.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexamethylphosphate triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 5 wt% based on a total weight of the electrolyte.

As described above, since the electrochemical device including the positive electrode according to the present invention stably exhibits excellent discharge capacity, output characteristics, and life characteristics, the electrochemical device is suitable for portable devices, such as mobile phones, notebook computers, and digital cameras, and electric cars such as hybrid electric vehicles (HEVs).

Thus, according to another embodiment of the present invention, a battery module including the electrochemical device as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the electrochemical device of the present invention is not particularly limited, but a cylindrical type using a can, a prismatic type, a pouch type, or a coin type may be used.

The electrochemical device according to the present invention may not only be used in a battery cell that is used as a power source of a small device, but may also be used as a unit cell in a medium and large sized battery module including a plurality of battery cells.

Examples of the medium and large sized device may be an electric vehicle, a hybrid electric vehicle, a plug-in hybrid electric vehicle, and a power storage system, but the medium and large sized device is not limited thereto.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

## Examples and Comparative Examples

### Example 1

(First step) $NiSO_4$, $CoSO_4$, and $MnSO_4$ were dissolved in ion exchange water in amounts such that a molar ratio of nickel:cobalt:manganese was 96:3:1 to prepare a transition metal-containing solution with a concentration of 2 mol/L. A 1 L batch reactor was filled with distilled water, 7 wt% ammonia water, and a 25 wt% sodium hydroxide aqueous solution, and the reactor was stirred at 50°C for 20 minutes.

Thereafter, the transition metal-containing solution and the ammonia water were quantitatively injected at supply rates of 25 L/h and 2.5 L/h for 50 hours, respectively, and a pH was decreased from 11.9 to 11.7 for 30 minutes using a pH-controlled pump. An oxidation process was performed by injecting oxygen at 2L/h. After 50 hours, the supply rate of the ammonia water was increased to 3 L/h.

When a volume of a reaction solution reached 80%, the supply of the reactants was stopped, the stirring was stopped to allow a precursor intermediate product to settle, a supernatant was removed, and a reaction was resumed. This operation was repeated about 5 times, and the positive electrode active material precursor nucleus formation reaction was terminated when an average particle diameter $D_{50}$ of positive electrode active material precursor nucleus (seed) particles reached 3.8 $\mu$m. Total reaction time was 70 hours.

(Second step) After the termination of the positive electrode active material precursor nucleus (seed) formation reaction, a main reaction was performed. During the main reaction, synthesis temperature was set at 70°C, the transition metal-containing solution was supplied at a rate of 70 L/h for 1 hour, and the supply rate was increased to 75 L/h for 9 hours and then fixed at 75 L/h. The ammonia water was injected at a supply rate of 4 L/h, and a pH was maintained at 11.00 to 11.05. The main reaction was performed in a nitrogen atmosphere after removing oxygen.

After precursor particles were separated from the reaction solution, the precursor particles were washed to remove impurities, dried in a 150°C drying oven for 15 hours, and then sieved to prepare a positive electrode active material precursor.

### Example 2

A positive electrode active material precursor was prepared in the same manner as in Example 1 except that a transition metal-containing solution with a concentration of 2 mol/L, which was prepared by dissolving $NiSO_4$, $CoSO_4$, and

$MnSO_4$ in ion exchange water in amounts such that a molar ratio of nickel: cobalt: manganese was 97:0.5:2.5, was used in the (first step).

**Comparative Example 1**

(First step) $NiSO_4$, $CoSO_4$, and $MnSO_4$ were dissolved in ion exchange water in amounts such that a molar ratio of nickel:cobalt:manganese was 96:3:1 to prepare a transition metal-containing solution with a concentration of 2 mol/L. A 1 L batch reactor was filled with distilled water, 9 wt% ammonia water, and a 25 wt% sodium hydroxide aqueous solution, and the reactor was stirred at 50°C for 20 minutes.

Thereafter, the transition metal-containing solution and the ammonia water were quantitatively injected at supply rates of 25 L/h and 2.5 L/h for 50 hours, respectively, and a pH was decreased from 12 to 11.8 for 30 minutes using a pH-controlled pump. An oxidation process was performed by injecting oxygen at 2L/h. After 50 hours, the supply rate of the ammonia water was increased to 3 L/h.

When a volume of a reaction solution reached 80%, the supply of the reactants was stopped, the stirring was stopped to allow a precursor intermediate product to settle, a supernatant was removed, and a reaction was resumed. This operation was repeated about 5 times, and the positive electrode active material precursor nucleus formation reaction was terminated when an average particle diameter $D_{50}$ of positive electrode active material precursor nucleus (seed) particles reached 3.8 $\mu$m. Total reaction time was 70 hours.

(Second step) After the termination of the positive electrode active material precursor nucleus (seed) formation reaction, a main reaction was performed. During the main reaction, synthesis temperature was set at 60°C, the transition metal-containing solution was supplied at a rate of 70 L/h for 2 hours and was supplied at a rate of 75 L/h for 20 hours, and the supply rate was then maintained at 75 L/h. The ammonia water was injected at a supply rate of 4 L/h, and a pH was maintained at 11.00 to 11.05. The main reaction was performed in an oxidizing atmosphere by supplying oxygen at 4L/h.

After precursor particles were separated from the reaction solution, the precursor particles were washed to remove impurities, dried in a 150°C drying oven for 15 hours, and then sieved to prepare a positive electrode active material precursor.

**Comparative Example 2**

A positive electrode active material precursor was prepared by performing a (first step) in the same manner as the (first step) described in Example 1, and performing a (second step) in the same manner as in Comparative Example 1.

**Comparative Example 3**

In the (second step), the transition metal-containing solution was supplied at a rate of 70 L/h for 1 hour, the supply rate was increased to 75 L/h for 9 hours and then fixed at 75 L/h, and when the target particle size was reached, the stirring was stopped to allow a precursor intermediate product to settle, a supernatant was removed, and a reaction was resumed. A positive electrode active material precursor was prepared in the same manner as in Comparative Example 1 except that the main reaction was terminated when a target $D_{50}$ of precursor particles was reached by repeating this operation about 5 times.

**Comparative Example 4**

A positive electrode active material precursor was prepared in the same manner as in Comparative Example 1 except that in the (second step), the transition metal-containing solution was supplied at a rate of 70 L/h for 1 hour, and the supply rate was increased to 75 L/h for 5 hours and then fixed at 75 L/h.

**Experimental Example 1: Evaluation of Positive Electrode Active Material Precursor**

Roundness, a pore area ratio, an average particle diameter $D_{50}$, and a crystallite size of a (001) plane of the positive electrode active material precursors of Examples 1 and 2 and Comparative Examples 1 to 4 were evaluated and presented in Table 1 below. Specific measurement methods are as follows.

(1) Roundness

Each of the positive electrode active material precursors of Examples 1 and 2 and Comparative Examples 1 to 4 was mixed with carbon black and a PVDF binder at a weight ratio of 95:2:3 in N-methylpyrrolidone to prepare a slurry, and the slurry was applied onto one surface of a 20 $\mu$m thick aluminum current collector. The applied slurry was dried to prepare an electrode, and the electrode was cut into a cross-section using an ion-milling device using an $Ar^+$ ion beam (manufacturer: Hitachi, product name: IM5000, accelerating voltage: 6 kV, ion beam current: 400 $\mu$A). A cross-sectional image of the electrode active material layer was obtained by taking a scanning electron microscopy (SEM) image of the cut electrode cross-section. Thereafter, for the cross-sectional image of the electrode, a minimum particle diameter ($D_{min}$, short diameter), a maximum particle diameter ($D_{max}$, long diameter) and an area (Area) of the particle were derived through an image analysis program, and the roundness of the positive electrode active material precursor was derived from an arithmetic mean value obtained by calculating roundnesses of 300 positive electrode active material precursor particles by Equation A.

$$[Equation\ A]\ Roundness = (4 \times area)/(\pi \times (D_{max})^2)$$

(2) Pore area ratio (PAR)

A positive electrode slurry was prepared by mixing each of the positive electrode active material precursors of Examples 1 to 3 and Comparative Examples 1 to 5 with carbon black and a PVDF binder in N-methylpyrrolidone at a weight ratio of 95:2:3, and the positive electrode slurry was applied onto one surface of a 20 $\mu$m thick aluminum current collector. A positive electrode material mixture layer applied was dried at 130°C to prepare an electrode, and the electrode was cut into a cross-section using an ion-milling device using an $Ar^+$ ion beam (manufacturer: Hitachi, product name: IM5000, accelerating voltage: 6 kV, ion beam current: 400 $\mu$A). A cross-sectional image of the electrode active material layer was obtained by taking a scanning electron microscope (SEM) image of the cut electrode cross-section. Thereafter, for the cross-sectional image of the electrode active material layer, a pore region of the positive electrode active material precursor particle was indicated as a shaded area, and a dense region of the positive electrode active material precursor particle was indicated as a white area using image analysis software WinRoof 6.1.1. For each of 100 or more arbitrary precursor particles among the measured positive electrode active material precursor, a ratio (%) of [shaded area/(shaded area + white area) $\times$ 100] was calculated, and the pore area ratio (PAR) was obtained by calculating an arithmetic mean value thereof.

(3) Average particle diameter $D_{50}$

After dispersing each of the positive electrode active material precursors prepared in Examples 1 and 2 and Comparative Examples 1 to 4 in a dispersion medium, the dispersion medium was introduced into a laser diffraction particle size measurement instrument (Microtrac MT 3000) and then irradiated with ultrasonic waves of about 28 kHz at an output of 60 W to obtain a volume cumulative particle size distribution graph, and the average particle diameter $D_{50}$ was then measured by obtaining a particle size corresponding to a volume accumulation of 50%.

(4) Crystallite size of (001) plane

Each of the positive electrode active material precursors prepared in Examples 1 and 2 and Comparative Examples 1 to 4 was put in a center groove of a holder for general powder, a surface of the sample was levelled using a slide glass, and a height was simultaneously allowed to match an edge of the holder. Thereafter, the crystallite size of the (001) plane was obtained as an average crystallite size of the (001) plane by analyzing XRD data, which was measured ($2\theta=15°\sim90°$, step size=0.02°, total scan time: 20 min) using an X-ray diffractometer (Bruker, D8 Endeavor), using the Fundamental Parameter Approach embedded in a Bruker's TOPAS program based on the Rietveld method.

[Table 1]

| | Roundness | Pore area ratio | $D_{50}$ [$\mu$m] | Crystallite size of (001) plane [nm] |
|---|---|---|---|---|
| Example 1 | 0.92 | 0.075 | 12.5 | 18.9 |
| Example 2 | 0.93 | 0.081 | 12.1 | 17.7 |
| Comparative Example 1 | 0.78 | 0.021 | 12.1 | 12.9 |
| Comparative Example 2 | 0.88 | 0.035 | 13.0 | 13.4 |
| Comparative Example 3 | 0.82 | 0.073 | 12.0 | 14.3 |
| Comparative Example 4 | 0.91 | 0.106 | 12.4 | 17.9 |

**<Positive Electrode Active Material Preparation>**

Each of the positive electrode active material precursors of Examples 1 and 2 and Comparative Examples 1 to 4 and LiOH were added such that a molar ratio of (Ni+Co+Mn) :Li was 1:1.075 and additionally, $Al_2(SO_4)_3 \cdot 18H_2O$, $ZrO_2$, $Sb_2O_3$, and $Sr(OH)_2 \cdot 8H_2O$ were added in amounts such that Zr, Al, Sr, and Sb were 1500 ppm, 6500 ppm, 1000 ppm, and 1500 ppm, respectively, based on a total weight of a lithium composite transition metal oxide finally obtained. After mixing these, the mixture was mixed at 400 rpm for 20 minutes, and then sintered at 890°C for 12 hours in an oxygen atmosphere to prepare each of positive electrode active materials that were prepared using the positive electrode active material precursors of Examples 1 and 2 and Comparative Examples 1 to 4.

**Experimental Example 2** - **Analysis of Doping Uniformity in Positive Electrode Active Material**

An amount of the individual doping element in each of the prepared positive electrode active materials was analyzed using etching inductively coupled plasma spectroscopy (etching ICP). Specifically, the positive electrode active material was immersed in deionized water at 25°C, pretreated by ultrasonication using an ultrasonicator for 30 minutes, and then analyzed using inductively coupled plasma optical emission spectroscopy (ICP-OES) to measure the amount of each doping element according to a distance from the center of the positive electrode active material. Specifically, while etching was performed by applying plasma to each positive electrode active material, the amount of each doping element at each position was measured after 3, 5, 10, 20, 30, 40, 50, 60, 120, 180, 240, 300, and 360 minutes to calculate a molar ratio of the doping element to Mn. The results thereof are illustrated in FIGS. 1 to 4 below.

Based on molar ratio values of each doping element to Mn at each point obtained from the above ICP data, doping uniformity was evaluated based on (1) the first doping uniformity index defined by Equation 1 below was measured for each doping element, and an arithmetic mean value of the measured first doping uniformity indices was calculated to determine whether the value was 16% or less, and (2) the second doping uniformity index defined by Equation 2 below was measured for each doping element, and an arithmetic mean value of the measured second doping uniformity indices was calculated to determine whether the value was in a range of 95% to 105%.

$$\text{[Equation 1] First doping uniformity index} = [N_{SD}]/[N_{avg}]$$

[Equation 1]
In Equation 1, $[N_{SD}]$ is a standard deviation value of a molar ratio of the individual doping element to Mn in the entire positive electrode active material, and $[N_{avg}]$ is an average value of the molar ratio of the individual doping element to the Mn in the entire positive electrode active material.

$$\text{Second doping uniformity index} = [N_{1/2}] / [N_{avg}] \qquad \text{[Equation 2]}$$

In Equation 2, $[N_{1/2}]$ is a molar ratio of the individual doping element to Mn measured at a position of $D_{50}/2$ from the center of the positive electrode active material, and $[N_{avg}]$ is an average value of the molar ratio of the individual doping element to the Mn in the entire positive electrode active material.

A case in which both conditions (1) and (2) were satisfied was evaluated as excellent, a case in which only one of the conditions (1) and (2) was satisfied was evaluated as medium, and a case in which neither of the conditions (1) and (2) was satisfied was evaluated as poor. The results thereof are presented in Table 2 below.

[Table 2]

| | (1) Mean value of the first doping uniformity indices | (2) Mean value of the second doping uniformity indices | Doping uniformity |
|---|---|---|---|
| Example 1 | 99.95% | 9.05% | Excellent |
| Example 2 | 99.77% | 9.51% | Excellent |
| Comparative Example 1 | 94.275% | 19.275% | Poor |
| Comparative Example 2 | 102.45% | 16.225% | Medium |
| Comparative Example 3 | 100.275% | 18.85% | Medium |
| Comparative Example 4 | 100.88% | 6.42% | Excellent |

As confirmed in Table 2, it may be confirmed that doping uniformity of the positive electrode active materials prepared from the positive electrode active material precursors of Examples 1 and 2 was better than that of the positive electrode active materials prepared from the positive electrode active material precursors of Comparative Examples 1 to 4.

**Experimental Example 3** - **Evaluation of Physical Properties of Positive Electrode Active Materials**

Roundness, a pore area ratio, an average particle diameter $D_{50}$, a crystallite size of a (003) plane, and particle strength of each of the prepared positive electrode active materials were analyzed and presented in Table 3.

(1) Roundness

Each of the positive electrode active materials of Examples 1 and 2 and Comparative Examples 1 to 4 was mixed with carbon black and a PVDF binder at a weight ratio of 95:2:3 in N-methylpyrrolidone to prepare a slurry, and the slurry was applied onto one surface of a 20 $\mu$m thick aluminum current collector. The applied slurry was dried to prepare an electrode, and the electrode was cut into a cross-section using an ion-milling device using an Ar+ ion beam (manufacturer: Hitachi, product name: IM5000, accelerating voltage: 6 kV, ion beam current: 400 $\mu$A). A cross-sectional image of the electrode active material layer was obtained by taking a scanning electron microscopy (SEM) image of the cut electrode cross-section. Thereafter, for the cross-sectional image of the electrode, a minimum particle diameter ($D_{min}$, short diameter), a maximum particle diameter ($D_{max}$, long diameter) and an area (Area) of the particle were derived through an image analysis program, and the roundness of the positive electrode active material was derived from an arithmetic mean value obtained by calculating roundnesses of 300 positive electrode active material particles by Equation A.

$$[\text{Equation A}] \ \text{Roundness} = (4 \ x \ \text{area})/(\pi \ x \ (D_{max})^2)$$

(2) Pore area ratio

A positive electrode slurry was prepared by mixing each of the prepared positive electrode active materials with carbon black and a PVDF binder in N-methylpyrrolidone at a weight ratio of 95:2:3, and the positive electrode slurry was applied onto one surface of a 20 $\mu$m thick aluminum current collector. A positive electrode material mixture layer applied was dried at 130°C to prepare an electrode, and the electrode was cut into a cross-section using an ion-milling device using an Ar+ ion beam (manufacturer: Hitachi, product name: IM5000, accelerating voltage: 6 kV, ion beam current: 400 $\mu$A). A cross-sectional image of the electrode active material layer was obtained by taking a scanning electron microscope (SEM) image of the cut electrode cross-section. Thereafter, for the cross-sectional image of the electrode active material layer, a pore region of the positive electrode active material particle was indicated as a shaded area, and a dense region of the positive electrode active material particle was indicated as a white area using image analysis software WinRoof 6.1.1. For each of 100 or more arbitrary positive electrode active material particles among the measured positive electrode active material, a ratio (%) of [shaded area/(shaded area + white area) $\times$ 100] was calculated, and the pore area ratio (PAR) was obtained by calculating an arithmetic mean value thereof.

(3) Average particle diameter $D_{50}$

After dispersing the prepared positive electrode active material in a dispersion medium, the dispersion medium was introduced into a laser diffraction particle size measurement instrument (Microtrac MT 3000) and then irradiated with ultrasonic waves of about 28 kHz at an output of 60 W to obtain a volume cumulative particle size distribution graph, and the average particle diameter $D_{50}$ was then measured by obtaining a particle size corresponding to a volume accumulation of 50%.

(4) Crystallite size of (003) plane

Each of the prepared positive electrode active materials was put in a center groove of a holder for general powder, a surface of the sample was levelled using a slide glass, a height was simultaneously allowed to match an edge of the holder, and the crystallite size of the (003) plane was then obtained as an average crystallite size of the (003) plane by analyzing XRD data, which was measured ($2\theta=6°\sim125°$, step size=0.02°, total scan time: 33 min) using an X-ray diffractometer (Bruker, D8 Endeavor), using the Fundamental Parameter Approach embedded in a Bruker's TOPAS program based on the Rietveld method.

(5) Particle strength

Particle strength was measured by applying pressure in a direction perpendicular to the positive electrode active material using a Surface testing Platform_step 300 instrument by Anton Paar GmbH to measure a point at which a crack occurs in the particle, calculating the particle strength according to [Equation B] below, and then repeating this 10 times to obtain an arithmetic mean value of the particle strength.

[Equation B]

Particle strength (unit: MPa) =

$$\frac{P}{\pi D^2}\left\{\frac{\sqrt{3}}{\sqrt{2}} + (1-2\mu)\frac{2}{\sqrt{2}+1}\right\}$$

In [Equation B], P represents the pressure applied perpendicular to the particle at the point when the crack occurs in the positive electrode active material particle.

In [Equation B], D represents a diameter of the particle assuming that the particle is perfectly spherical, and is calculated as an arithmetic mean value of a horizontal diameter and a vertical diameter of the particle. In this case, the diameter of the particle was measured from an SEM image of the particle taken using a scanning electron microscope (SEM).

$\mu$ represents Poisson's ratio, and is defined as a ratio of vertical strain ($R_v$) to horizontal strain ($R_p$) of the diameter of the particle. The vertical strain ($R_v$) of the diameter of the particle was calculated according to [Equation B-1] below.

[Equation B-1]

Vertical strain ($R_v$) of the particle diameter = $\dfrac{(1-D_v)}{D_0}$

In [Equation B-1], $D_0$ means a diameter of the particle in a vertical direction before applying pressure to the particle, and $D_v$ means a diameter of the positive electrode active material particle in a vertical direction at the point when the crack occurs in the particle.

The horizontal strain ($R_p$) of the diameter of the particle may be calculated according to [Equation B-2] below. However, when calculating the Poisson's ratio, since horizontal deformation of the particle may not be considered, the horizontal strain ($R_p$) may be calculated as 1.

[Equation B-2]

Horizontal strain ($R_v$) of the particle diameter = $\dfrac{(1-D_p)}{D_1}$

In [Equation B-2], $D_1$ means a diameter of the particle in a horizontal direction before applying pressure to the particle, and $D_p$ means a diameter of the particle in a horizontal direction at the point when the crack occurs in the particle.

[Table 3]

| | Roundness | Pore area ratio | $D_{50}$ [μm] | Crystallite size [nm] | Particle strength [MPa] |
|---|---|---|---|---|---|
| Example 1 | 0.94 | 0.043 | 13.4 | 108 | 130.4 |
| Example 2 | 0.95 | 0.045 | 11.3 | 113 | 135.2 |
| Comparative Example 1 | 0.81 | 0.012 | 13.2 | 88 | 118.4 |

(continued)

|  | Roundness | Pore area ratio | $D_{50}$ [μm] | Crystallite size [nm] | Particle strength [MPa] |
|---|---|---|---|---|---|
| Comparative Example 2 | 0.90 | 0.019 | 13.3 | 95 | 125.1 |
| Comparative Example 3 | 0.85 | 0.039 | 13.2 | 98 | 120.5 |
| Comparative Example 4 | 0.89 | 0.069 | 11.5 | 106 | 120.9 |

<Lithium Secondary Battery Preparation>

The positive electrode active material prepared from each of the positive electrode active material precursors prepared in Examples 1 and 2 and Comparative Examples 1 to 4, carbon black as a conductive agent, and polyvinylidene fluoride (PVDF), as a binder, were mixed in N-methyl-2-pyrrolidone (NMP) in a weight ratio of 95:2.5:2.5 to prepare a positive electrode slurry. One surface of an aluminum current collector was coated with the positive electrode slurry, dried at 130°C, and then rolled to prepare a positive electrode.
A negative electrode slurry was prepared by mixing artificial graphite as a negative electrode active material, carbon black as a conductive agent, and SBR-CMC, as a binder, in a weight ratio of 95:3.5:1.5, and one surface of a copper current collector was coated with the negative electrode slurry, dried at 100°C, and then rolled to prepare a negative electrode.
A lithium secondary battery was prepared by preparing an electrode assembly by disposing a separator between the positive electrode and the negative electrode, disposing the electrode assembly in a battery case, and then injecting an electrolyte solution into the case. The electrolyte solution was an electrolyte solution in which 1 M $LiPF_6$ was dissolved in a mixed organic solvent in which ethylene carbonate (EC) :ethyl methyl carbonate (EMC) were mixed in a volume ratio of 1:2.

Experimental Example 4 - **Resistance Characteristics**

Each of the above-prepared lithium secondary batteries was charged at 0.2C to 4.25 V in a constant current-constant voltage (CC-CV) mode at room temperature, and discharged at the same C-rate to 2.5 V. The lithium secondary battery was charged again at 0.2C to 4.25 V, then discharged to 50% of the discharged capacity, and pulsed at 1C for 10 seconds at a state of charge (SOC) of 90 to measure resistance. Measurement results are presented in Table 2.

Experimental Example 5 - **High-temperature Life Characteristics**

Charging of each of the above-prepared lithium secondary batteries at 0.1C to 4.2 V in a CC-CV mode at 45°C and discharging of the lithium secondary battery at a constant current of 2C to 2.5 V were set as one cycle and after performing 100 cycles of the charging and discharging, high-temperature life characteristics were evaluated by measuring capacity retention. Measurement results are presented in Table 4.

[Table 4]

|  | SOC 50% resistance (Ω) | Capacity retention (%) |
|---|---|---|
| Example 1 | 9.1 | 93 |
| Example 2 | 9.5 | 91 |
| Comparative Example 1 | 10.5 | 87 |
| Comparative Example 2 | 9.8 | 89 |
| Comparative Example 3 | 9.8 | 89 |
| Comparative Example 4 | 10.1 | 89 |

As confirmed in Table 4, it may be confirmed that resistance characteristics and life characteristics of the lithium secondary batteries including the positive electrode active materials prepared from the positive electrode active material precursors of Examples 1 and 2 were better than those of the lithium secondary batteries including the positive electrode active materials prepared from the positive electrode active material precursors of Comparative Examples 1 to 4.

24

**Claims**

1. A positive electrode active material comprising nickel among total metals excluding lithium in an amount of 80 mol% or more, and

   at least one doping element, wherein the at least one doping element has an average value of a first doping uniformity index, which is defined by Equation 1 and measured for each individual doping element, of 16% or less, and
   having a particle strength of 121 MPa or more.

$$[\text{Equation 1}]$$

$$\text{First doping uniformity index} = [N_{SD}]/[N_{avg}]$$

   wherein, in Equation 1,

   $[N_{SD}]$ is a standard deviation value of a molar ratio of the individual doping element to manganese (Mn) in the entire positive electrode active material, and
   $[N_{avg}]$ is an average value of the molar ratio of the individual doping element to the Mn in the entire positive electrode active material.

2. The positive electrode active material of claim 1, wherein the at least one doping element has the average value of the first doping uniformity index, which is defined by Equation 1 and measured for each individual doping element, of 9.5% or less.

3. The positive electrode active material of claim 1, wherein the at least one doping element has an average value of a second doping uniformity index, which is defined by Equation 2 and measured for each individual doping element, of 95% to 105%.

$$[\text{Equation 2}]$$

$$\text{Second doping uniformity index} = [N_{1/2}]/[N_{avg}]$$

   wherein, in Equation 2,

   $[N_{1/2}]$ is a molar ratio of the individual doping element to Mn measured at a position of $D_{50}/2$ from a center of the positive electrode active material, and
   $[N_{avg}]$ is an average value of the molar ratio of the individual doping element to the Mn in the entire positive electrode active material.

4. The positive electrode active material of claim 1, wherein the positive electrode active material has the particle strength of 125 MPa to 135 MPa.

5. The positive electrode active material of claim 1, wherein a crystallite size of a (003) plane measured by X-ray diffraction (XRD) analysis is 107 nm or more.

6. The positive electrode active material of claim 1, wherein the positive electrode active material has an average particle diameter $D_{50}$ of 7 $\mu$m to 15 $\mu$m.

7. The positive electrode active material of claim 1, wherein the positive electrode active material has a roundness of 0.91 or more.

8. The positive electrode active material of claim 1, wherein the positive electrode active material has a pore area ratio of 0.02 to 0.10.

9. The positive electrode active material of claim 1, wherein the doping element is included in an amount of 5,000 ppm to 15,000 ppm based on a total weight of the positive electrode active material.

**10.** A positive electrode comprising the positive electrode active material of claim 1.

**11.** An electrochemical device comprising the positive electrode of claim 10.

**12.** A positive electrode active material precursor comprising nickel among total metals in an amount of 80 mol% or more, and

> having a roundness of 0.83 or more, and
> a pore area ratio (PAR) of 0.04 to 0.10.

**13.** The positive electrode active material precursor of claim 12, wherein the pore area ratio is in a range of 0.05 to 0.08.

**14.** The positive electrode active material precursor of claim 12, wherein the roundness is in a range of 0.85 to 0.92.

**15.** The positive electrode active material precursor of claim 12, wherein the positive electrode active material precursor has an average particle diameter $D_{50}$ of 7 $\mu$m to 15 $\mu$m.

**16.** The positive electrode active material precursor of claim 12, wherein a crystallite size of a (001) plane measured by X-ray diffraction (XRD) analysis is 15 nm or more.

**17.** The positive electrode active material precursor of claim 12, wherein cobalt among the total metals is included in an amount of 1 mol% to 10 mol%.

[FIG. 1]

[FIG. 2]

[FIG. 3]

[FIG. 4]

TRANSLATION

| INTERNATIONAL SEARCH REPORT | International application No. |
|---|---|
| | **PCT/KR2025/013316** |

**A.    CLASSIFICATION OF SUBJECT MATTER**

**H01M 4/525**(2010.01)i; **H01M 4/505**(2010.01)i; **H01M 4/131**(2010.01)i; **H01M 10/052**(2010.01)i; **H01M 4/02**(2006.01)i

According to International Patent Classification (IPC) or to both national classification and IPC

**B.    FIELDS SEARCHED**

Minimum documentation searched (classification system followed by classification symbols)

H01M 4/525(2010.01); H01M 10/052(2010.01); H01M 10/0525(2010.01); H01M 4/485(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 양극 활물질(positive active material), 도핑(doping), 입자 (particle), 리튬 니켈코발트망간 산화물(lithium nickel cobalt manganese oxide)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2019-0078498 A (POSCO et al.) 04 July 2019 (2019-07-04)<br>claims 1, 2, 17, 18, 21; paragraphs [0024], [0025], [0107], [0113], [0132], [0134]; example 1; table 4-6; figure 1 | 1-17 |
| A | KR 10-2018-0063849 A (SAMSUNG SDI CO., LTD.) 12 June 2018 (2018-06-12)<br>claims 10, 13, 14; paragraph [0061] | 1-17 |
| A | KR 10-2023-0008126 A (BEIJING EASPRING MATERIAL TECHNOLOGY CO., LTD.) 13 January 2023 (2023-01-13)<br>claims 1, 6, 12; examples 1, 2 | 1-17 |
| A | KR 10-2022-0043199 A (TANAKA CHEMICAL CORPORATION et al.) 05 April 2022 (2022-04-05)<br>claims 1-7; examples 1-4 | 1-17 |
| A | KR 10-1853836 B1 (L&F CO., LTD.) 08 June 2018 (2018-06-08)<br>claims 2-15; example 1 | 1-17 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 November 2025** | **30 November 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2025/013316**

| Patent document cited in search report | | | Publication date (day/month/year) | Patent family member(s) | | | Publication date (day/month/year) |
|---|---|---|---|---|---|---|---|
| KR | 10-2019-0078498 | A | 04 July 2019 | CN | 111771303 | A | 13 October 2020 |
| | | | | CN | 111771303 | B | 29 March 2024 |
| | | | | EP | 3734720 | A1 | 04 November 2020 |
| | | | | EP | 3734720 | B1 | 11 June 2025 |
| | | | | EP | 3734720 | C0 | 11 June 2025 |
| | | | | JP | 2021-509220 | A | 18 March 2021 |
| | | | | JP | 7008828 | B2 | 25 January 2022 |
| | | | | KR | 10-2177049 | B1 | 10 November 2020 |
| | | | | US | 11973221 | B2 | 30 April 2024 |
| | | | | US | 2023-0140577 | A1 | 04 May 2023 |
| | | | | WO | 2019-132332 | A1 | 04 July 2019 |
| KR | 10-2018-0063849 | A | 12 June 2018 | CN | 108155357 | A | 12 June 2018 |
| | | | | CN | 108155357 | B | 08 March 2022 |
| | | | | EP | 3331066 | A1 | 06 June 2018 |
| | | | | EP | 3331066 | B1 | 13 October 2021 |
| | | | | HU | E057508 | T2 | 28 May 2022 |
| | | | | KR | 10-2199714 | B1 | 07 January 2021 |
| | | | | PL | 3331066 | T3 | 27 December 2021 |
| | | | | US | 10833329 | B2 | 10 November 2020 |
| | | | | US | 11552294 | B2 | 10 January 2023 |
| | | | | US | 2018-0159128 | A1 | 07 June 2018 |
| | | | | US | 2021-0020936 | A1 | 21 January 2021 |
| KR | 10-2023-0008126 | A | 13 January 2023 | CN | 114665085 | A | 24 June 2022 |
| | | | | CN | 114665085 | B | 23 February 2024 |
| | | | | EP | 4138160 | A1 | 22 February 2023 |
| | | | | EP | 4138160 | B1 | 12 November 2025 |
| | | | | JP | 2023-515899 | A | 14 April 2023 |
| | | | | JP | 7292537 | B2 | 16 June 2023 |
| | | | | KR | 10-2708961 | B1 | 23 September 2024 |
| | | | | US | 11837722 | B2 | 05 December 2023 |
| | | | | US | 2023-0122382 | A1 | 20 April 2023 |
| | | | | WO | 2022-134617 | A1 | 30 June 2022 |
| KR | 10-2022-0043199 | A | 05 April 2022 | CN | 114207874 | A | 18 March 2022 |
| | | | | CN | 114207874 | B | 11 July 2025 |
| | | | | EP | 4012806 | A1 | 15 June 2022 |
| | | | | JP | 7695883 | B2 | 19 June 2025 |
| | | | | US | 2022-0158184 | A1 | 19 May 2022 |
| KR | 10-1853836 | B1 | 08 June 2018 | WO | 2019-017534 | A1 | 24 January 2019 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240117212